# EUROPÄISCHE PATENTSCHRIFT

(11) **EP 0 846 437 B1**
(45) Veröffentlichungstag und Bekanntmachung des Hinweises auf die Patenterteilung: **14.05.2003**
(21) Anmeldenummer: 97119843.7
(22) Anmeldetag: 13.11.1997
(51) Int. Cl.: A47J 39/00

(54) **Speisetransportbehälter**
Transport container for food
Récipient pour le transport d'aliment

(30) Priorität: 03.12.1996 DE 19650069
(43) Veröffentlichungstag der Anmeldung: 10.06.1998
(73) Patentinhaber: ETOL Vertriebs GmbH, 77728 Oppenau (DE)
(72) Erfinder: Eckert, Wolf, 77704 Oberkirch (DE)
(74) Vertreter: Lasch, Hartmut Dipl.-Ing.

(56) Entgegenhaltungen:
- CH-A- 83 853
- FR-A- 2 639 619
- US-A- 3 395 267
- US-A- 3 627 399
- US-A- 3 725 645

## Beschreibung

Die Erfindung betrifft einen Speisetransportbehälter mit einem schalenartigen Behälterunterteil und einem elektrischen Heizelement, das in den Innenraum des Behälterunterteils in lösbarer Weise einsetzbar und aus diesem entnehmbar ist, wobei das Behälterunterteil einen Durchbruch aufweist, durch den Anschlüsse des Heizelementes hindurchführbar sind.

Bei der Verteilung von Speisen aus Großküchen an unterschiedliche, räumlich voneinander getrennt angeordnete Abnehmer, beispielsweise durch Belieferung verschiedener Haushalte, ist es notwendig, ein übermäßiges Abkühlen der Speisen während des Transportes zu verhindern. Es ist aus diesem Grunde versucht worden, die Speise in thermisch isolierten Transportbehältern zu transportieren, um dadurch ein Abkühlen zumindest wesentlich zu verzögern, jedoch kühlen die Speisen auch in derartigen isolierten Transportbehältern im Laufe der Zeit so deutlich ab, daß sie zum Verzehr nochmals aufgewärmt werden müssen, was sehr aufwendig und mühselig ist. Darüber hinaus ist mit dem erneuten Aufwärmen üblicherweise auch ein deutlicher Verlust hinsichtlich der Qualität und des Geschmackes der Speisen verbunden.

Um die genannten Nachteile zu vermeiden, sind Speisetransportbehälter mit einem fest integrierten Heizelement bekannt. Ein derartiger Speisetransportbehälter besitzt in der Regel eine aus Edelstahl bestehende Innenwandung, die mittels eines Heizelementes von unten erwärmt wird. Obwohl mit einem derartigen Speisetransportbehälter ein Abkühlen der Speisen während des Transportes verhindert werden kann, weist er den Nachteil auf, daß er aufgrund des fest integrierten Heizelementes, das zudem eine Vorrichtung zur Temperatursteuerung benötigt, relativ teuer ist. Des weiteren besteht das Problem, daß Speisetransportbehälter täglich maschinell gereinigt werden, wodurch die Gefahr besteht, daß die das integrierte Heizelement abschirmende Dichtung im Laufe der Zeit undicht wird, wodurch das Heizelement beschädigt werden kann.

Aus der CH-B-83 853 (Basis für den Oberbegriff der Anspruchs 1) ist ein Speisebehälter bekannt, in den ein Heizelement lösbar einsetzbar ist, so daß der Behälter wahlweise als reiner Isolationsbehälter oder als aktive Kochvorrichtung verwendet werden kann. Wenn in einen derartigen, mit Heizelement versehenen Behälter die bei Gebrauch üblicherweise verwendeten Speisecontainer eingesetzt werden, tritt das Problem auf, daß diese herstellungsbedingt gewisse Abweichungen in ihren Außenabmessungen besitzen. Dies kann dazu führen, daß ein Speisecontainer mit dem in den Speisetransportbehälter eingesetzten Heizelement nicht in Anlage steht, so daß die Wärmeübertragung verschlechtert ist. Von Speisetransportbehältern mit fest integriertem Heizelement ist es zur Überwindung dieses Problems bekannt, in den Speisetransportbehältr Wasser oder eine andere gleichwirkende Flüssigkeit als Übertragungsmedium einzufüllen. Dies ist bei einem Speisebehälter mit herausnehmbarem Heizelement gemäß der CH-B-83 853 jedoch nicht möglich, da das Wasser an dem Durchbruch, durch den die elektrischen Anschlüsse des Heizelementes nach außen geführt sind, auslaufen würde.

Der Erfindung liegt die Aufgabe zugrunde, einen Speisetransportbehälter der genannten Art zu schaffen, bei dem in einfacher Weise eine gute Wärmeübertragung zwischen dem Heizelement und einem Speisecontainer gewährleistet ist.

Diese Aufgabe wird erfindungsgemäß durch die Merkmale des Anspruchs gelöst.

Wenn das Behälterunterteil als mit einem Deckel verschließbarer Kasten mit einem Boden und mehreren sich davon nach oben erstreckenden Seitenwänden ausgebildet ist, sollte der Durchbruch in einer vertikalen Seitenwand mit deutlichem Abstand zum Boden ausgebildet sein, wobei der Durchbruch vorzugsweise in etwa der halben Höhe der Seitenwand angeordnet ist. Auch der erfindungsgemäße Speisetransportbehälter kann sowohl als passiver, d.h. lediglich thermisch abschirmender Transportbehälter oder auch als aktiver Transportbehälter verwendet werden, bei dem die Speisen mittels des eingelegten Heizelementes warmgehalten oder erwärmt werden. Es ist dabei nicht notwendig, für jeden Speisetransportbehälter, ein eigenes elektrisches Heizelement vorzusehen, sondern bei Bedarf kann das Heizelement in den Speisetransportbehälter eingelegt und angeschlossen werden.

Ein weiterer Vorteil ergibt sich hinsichtlich der Reinigung der Speisetransportbehälter. Bevor die benutzten Speisetransportbehälter in die Reinigungsanlage eingesetzt werden, wird das elektrische Heizelement entnommen, so daß dessen Beschädigung oder Beeinflussung durch den Reinigungsvorgang ausgeschlossen ist.

Es sei angemerkt, daß die Erfindung sowohl bei dem oben genannten kastenartigen Speisetransportbehälter als auch bei einem flachen Speisetransportbehälter mit einem tablettartigen Behälterunterteil Verwendung finden kann, das durch eine Haube bzw. Cloche abdeckbar ist.

Die elektrischen Anschlüsse des Heizelementes sind von der Innenseite des Speisetransportbehälters durch den Durchbruch des Behälterunterteils hindurch nach außen geführt. In vorteilhafter Ausgestaltung ist der Durchbruch von einer in der Wandung des Behälterunterteils festgelegten Buchse gebildet, die kraft- und/oder formschlüssig in der Wandung des Behälterunterteils befestigt ist.

Vorzugsweise besteht der gesamte Speisetransportbehälter oder zumindest das Behälterunterteil vollständig aus Kunststoff. Zu diesem Zweck sind eine äußere und eine innere Kunststoff-Schale auf Abstand angeordnet, wobei der zwischen ihnen gebildete Zwischenraum mit einem isolierenden Kunststoffmaterial ausgeschäumt ist. Um eine Beschädigung des Wandungsaufbaus des Behälterunterteils im Bereich des Durchbruchs zu vermeiden, ist die Buchse durch thermische Beaufschlagung mit der Wandung des Behälterunterteils verbunden, beispielsweise verschweißt, wobei sie endseitig ausgebildete Flansche aufweisen kann, die eine Bewegung in Axialrichtung der Buchse verhindern.

Wenn der Speisetransportbehälter passiv, d.h. ohne Heizelement, verwendet wird, sollte der Durchbruch von einem Stopfen verschlossen sein, um einen Wärmeaustausch zwischen der Innen- und der Außenseite zu verhindern.

In bevorzugter Ausgestaltung der Erfindung weist das Heizelement einen in den Durchbruch eingreifenden Ansatz auf, so daß es in formschlüssiger Weise in dem Transportbehälter positioniert und gegen seitliche Verschiebungen gesichert ist. An dem Ansatz können die elektrischen Anschlußkontakte ausgebildet sein, so daß diese von der Außenseite des Transportbehälters leicht zugänglich sind.

In der Regel wird das Heizelement auf dem Boden des Innenraums des Behälterunterteils aufgelegt. Dabei können im Randbereich des Heizelementes Abstufungen zu dem Boden des Transportbehälters auftreten, die insbesondere für kleinere einzusetzende Speisecontainer nachteilig sein können. Um derartige Abstufungen zu vermeiden, ist in der Erfindung vorgesehen, daß in dem Behälterunterteil eine Ausnehmung ausgebildet ist, in die das Heizelement vorzugsweise unter enger Passung einlegbar ist. Somit füllt das Heizelement die Ausnehmungen zumindest annähernd vollständig aus, so daß am Boden des Transportbehälters eine im wesentlichen kontinuierliche, glatte Oberfläche gebildet ist.

Als Heizelement kann entweder eine Widerstandsheizung mit entsprechender Thermostatvorrichtung oder auch eine an sich bekannte Induktionsheizung Verwendung finden. Vorzugsweise ist das Heizelement jedoch von PTC-Elementen gebildet, die einen positiven Temperatur-Koeffizienten aufweisen, so daß die Leistungsaufnahme der PTC-Elemente mit zunehmender Temperatur sinkt, wodurch eine Regelung der Temperatur im Transportbehälter nicht notwendig ist.

Aus Schutzgründen sind die PTC-Elemente vorzugsweise von einem wärmeleitenden Material, insbesondere Aluminium, Stahl oder Keramik, umgeben oder in dieses eingegossen.

Weitere Einzelheiten und Merkmale der Erfindung sind aus der folgenden Darstellung einiger Ausführungsbeispiele unter Bezugnahme auf die Zeichnungen ersichtlich. Es zeigen:
- Figur 1: einen Querschnitt durch einen kastenartigen Speisetransportbehälter,
- Figur 2: das Detail II in Figur 1 mit eingesetztem Stopfen,
- Figur 3: einen tablettartigen Speisetransportbehälter und
- Figur 4: den Schnitt IV-IV in Figur 3.

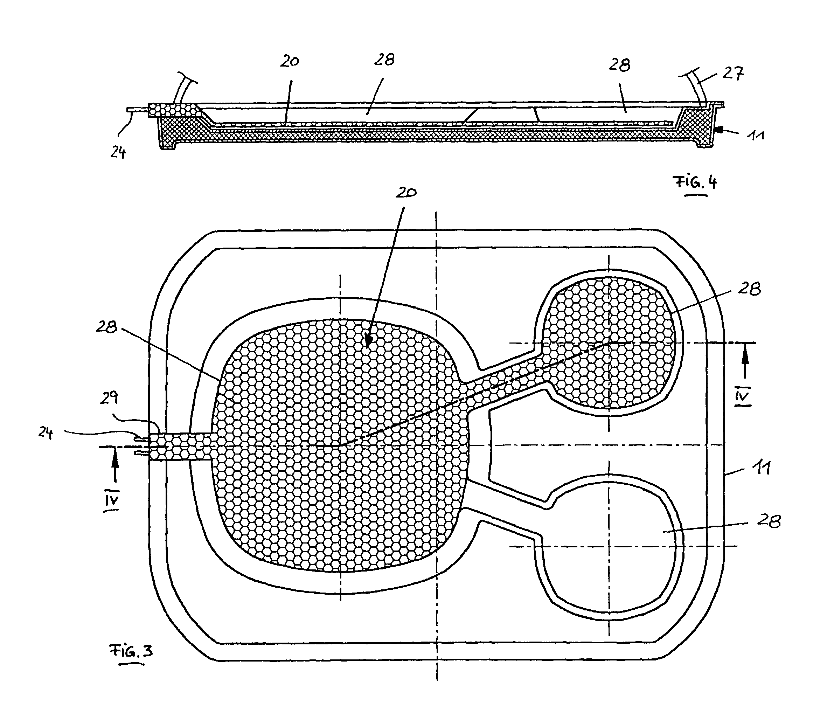

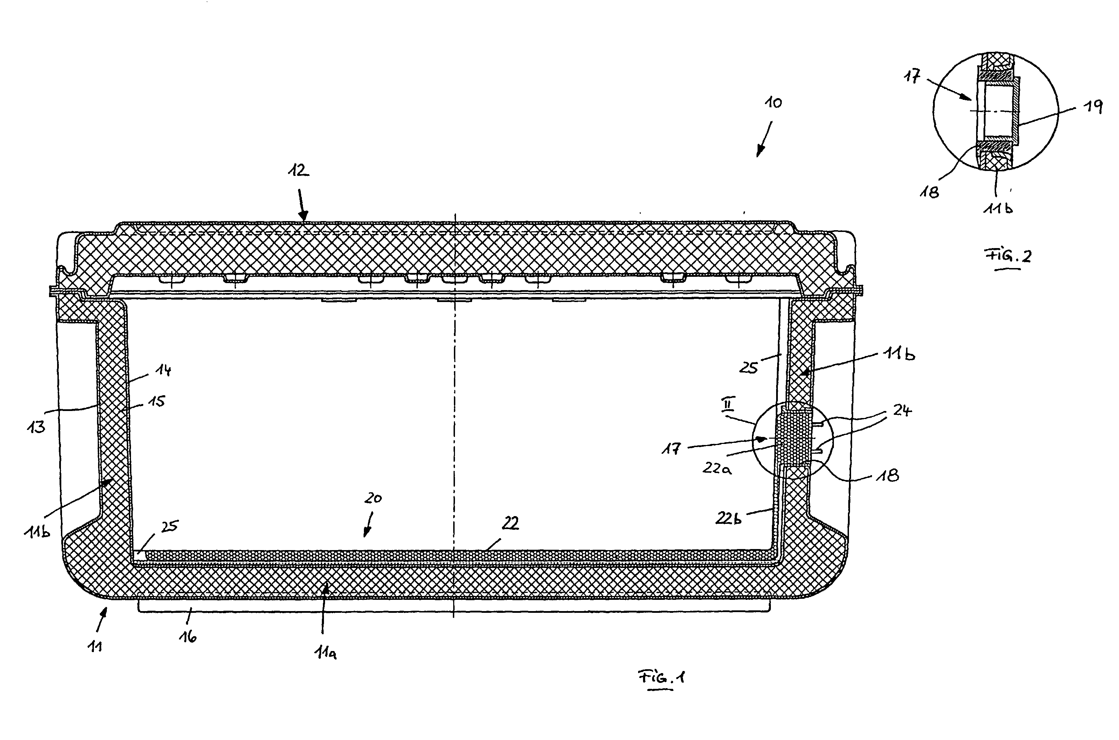

Gemäß Figur 1 umfaßt ein Speisetransportbehälter 10 ein kastenartiges Behälterunterteil 11 mit einem Boden 11a und sich von diesem vertikal nach oben erstreckenden Seitenwänden 11b. Auf den oberen Rand der Seitenwände 11b ist in bekannter Weise ein Deckel 12 aufsetz- und befestigbar.

Sowohl der Deckel 12 als auch das Behälterunterteil 11 weisen eine aus Kunststoff, vorzugsweise Polypropylen bestehende Außenschale 13 und eine im Abstand dazu angeordnete gleichartige Innenschale 14 auf, wobei der zwischen den beiden Schalen 13 und 14 gebildete Raum mit einem Kunststoffmaterial 15 ausgeschäumt ist. Auf der Unterseite des Bodens 11a sind Standfüße 16 montiert, über die der Behälter auf eine Stellfläche aufgelagert werden kann.

In einer Seitenwand 11b des Behälterunterteils 11 ist in etwa deren halber Höhe ein Durchbruch 17 ausgebildet, der mit einer rohrförmigen Buchse 18 aus geeignetem Kunststoffmaterial ausgekleidet ist, die mit den anliegenden Wandungsabschnitten des Behälterunterteils 11 verklebt oder verschweißt ist. Dabei ist darauf geachtet, daß zwischen der Wandung des Behälterunterteils 11 und der rohrförmigen Buchse 18 keine Hinterschnitte gebildet sind, in denen sich Speisereste ansammeln könnten.

In den Innenraum des Speisetransportbehälters 11 ist ein Heizelement 20 einbringbar, das eine Bodenplatte 22 mit eingelagerten PTC-Heizelementen und ein an ihrem einen axialen Ende anschließendes, sich vertikal erstreckendes Verbindungsstück 22b umfaßt, an dessen oberem Ende ein an die Querschnittsabmessungen des Durchbruchs 17 angepaßter Ansatz 22a angeordnet ist, der in den Durchbruch 17 eingreifen kann. Dabei sind im Boden und der mit dem Durchbruch 17 versehenen Seitenwand 11b Ausnehmungen 25 ausgebildet, in die das Heizelement 20 derart eingelegt ist, daß ein glatter, kontinuierlicher Übergang zwischen der Oberfläche des Heizelementes 20 und den angrenzenden Behälteroberflächen gebildet und somit das Heizelement 20 gegen eine Verschiebung auf dem Boden des Behälterunterteils 11 gesichert ist. An dem Ansatz 22a sind Kontakte 24 ausgebildet, über die das Heizelement 20 von der Außenseite des Behälters 10 elektrisch angeschlossen werden kann. Da der Durchbruch 17 vom Boden des Innenraums des Behälterunterteils 11 nach oben versetzt, d. h. bei dargestellten Ausführungsbeispiel in der Seitenwand 11b in etwa deren halber Höhe ausgebildet ist, kann in den Speisetransportbehälter 10 Wasser als Übertragungsmedium eingefüllt werden kann, ohne daß dieses nach unten auslaufen kann.

Wenn der Speisetransportbehälter 10 als passiver Behälter, d.h. ohne Heizelement, verwendet werden soll, kann der Durchbruch 17 mittels eines von außen einsetzbaren Stopfens 19 (Figur 2) verschlossen werden.

Die Figuren 3 und 4 zeigen ein weiteren Ausführungsbeispiel, wobei das Behälterunterteil 11 als flaches Tablett mit mehreren Vertiefungen 28 zur Aufnahme von entsprechenden Geschirrteilen versehen ist. Das Tablett 11 ist mittels einer nur andeutungsweise in Figur 4 dargestellten Haube 27 abdeckbar.

In eine oder mehrere Vertiefungen 28 des Tabletts 11 ist ein Heizelement 20 mit dem genannten Aufbau einsetzbar, das sich durch einen seitlichen Durchbruch 29 bis zum äußeren Rand des Tabletts 11 erstreckt und dort über Kontakte 24 elektrisch angeschlossen werden kann.

## Patentansprüche

1. Speisetransportbehälter (10) mit einem schalenartigen Behälterunterteil (11) und einem elektrischen Heizelement (20), das in den Innenraum des Behälterunterteils (11) in lösbarer Weise einsetzbar und aus diesem entnehmbar ist, wobei das Behälterunterteil (11) einen Durchbruch (17) aufweist, durch den Anschlüsse (22a, 24) des Heizelementes (20) hindurchführbar sind, und der an einer vom Boden (11a) des Behälterunterteils (11) nach oben versetzten Stelle angeordnet ist, **dadurch gekennzeichnet daß** in dem Boden (11a) des Behälterunterteils (11) eine Ausnehmung (25) ausgebildet ist, in die das Heizelement (20) einlegbar ist, wobei ein abstufungsfreier, kontinuierlicher, glatter Übergang zwischen der Oberfläche des Heizelementes (20) und den angrenzenden Oberflächen des Bodens (11a) des Behälterunterteils (11) gebildet ist.

2. Speisetransportbehälter nach Anspruch 1, **dadurch gekennzeichnet, daß** das Heizelement (20) die Ausnehmung (25) im Boden (11a) des Behälterunterteils (11) zumindest annähernd vollständig ausfüllt.

3. Speisetransportbehälter nach Anspruch 1 oder 2, **dadurch gekennzeichnet, daß** das Heizelement (20) eine Bodenplatte (22) und ein an deren einem axialen Ende anschließendes, sich vertikal erstreckendes Verbindungsstück (22b) umfaßt, an dessen oberem Ende die den Durchbruch (17) durchgreifenden Anschlüsse (22a,24) des Heizelementes (20) angeordnet sind.

4. Speisetransportbehälter nach einem der Ansprüche 1 bis 3, **dadurch gekennzeichnet, daß** der Durchbruch (17) in einer Seitenwand (11b) des Behälterunterteils (11) in etwa deren halber Höhe ausgebildet ist.

5. Speisetransportbehälter nach einem der Ansprüche 1 bis 4, **dadurch gekennzeichnet, daß** der Durchbruch (17) von einer in der Wandung des Behälterunterteils (11) festgelegten Buchse (18) gebildet ist.

6. Speisetransportbehälter nach einem der Ansprüche 1 bis 5, **dadurch gekennzeichnet, daß** das Heizelement(20) einen in den Durchbruch (17) eingreifenden Ansatz (22a) aufweist.

7. Speisetransportbehälter nach einem der Ansprüche 3 bis 6, **dadurch gekennzeichnet, daß** in der mit dem Durchbruch (17) versehenen Seitenwand (11b) des Behälterunterteils (11) eine weitere Ausnehmung (26) ausgebildet ist, in die das Verbindungsstück (22b) des Heizelementes (20) einlegbar ist.

8. Speisetransportbehälter nach einem der Ansprüche 1 bis 7, **dadurch gekennzeichnet, daß** das Heizelement (20) von einem wärmeleitenden Material umgeben ist.

9. Speisetransportbehälter nach einem der Ansprüche 1 bis 8, **dadurch gekennzeichnet, daß** das Heizelement (20) ein PTC-Element ist.

10. Satz bestehend aus einem Speisetransportbehälter nach einem der Ansprüche 1 bis 9 und einem Stopfen (18), mittels dessen der Durchbruch (17) des Behälterunterteils (11) verschließbar ist.

## Claims

1. Food transportation container (10) with a tray-like container base (11) and an electrical heating element (20) releasably insertable in and removable from the interior of the container base (11), which has an opening (17), through which can be passed the terminals (22a, 24) of the heating element (20), and which is located at a point upwardly displaced from the bottom (11a) of the container base (11), **characterized in that** in the bottom (11a) of the container base (11) is formed a recess (25) into which can be inserted the heating element (20), a step-free, continuous and smooth transition being formed between the surface of the heating element (20) and the adjacent surfaces of the bottom (11a) of the container base (11).

2. Food transportation container according to claim 1, **characterized in that** the heating element (20) at least approximately completely fills the recess (25) in the bottom (11a) of the container base (11).

3. Food transportation container according to claim 1 or 2, **characterized in that** the heating element (20) comprises a base plate (22) and a vertically extending connecting piece (22b) connected to one axial end of said base plate and on whose upper end are located the terminals (22a, 24) of the heating element (20) passing through the opening (17).

4. Food transportation container according to one of the claims 1 to 3, **characterized in that** the opening (17) is formed at roughly half the height of a side wall (11b) of the container base (11).

5. Food transportation container according to one of the claims 1 to 4, **characterized in that** the opening (17) is formed by a bush (18) fixed in the wall of the container base (11).

6. Food transportation container according to one of the claims 1 to 5, **characterized in that** the heating element (20) has a lug (22a) engaging in the opening (17).

7. Food transportation container according to one of the claims 3 to 6, **characterized in that** a further recess (26) is formed in the side wall (11b) of the container base (11) provided with the opening (17) and into it can be inserted the connecting piece (22b) *of* the heating element (20).

8. Food transportation container according to one of the claims 1 to 7, **characterized in that** the heating element (20) is surrounded by a heat conducting material.

9. Food transportation container according to one of the claims 1 to 8, **characterized in that** the heating element (20) is a PTC element.

10. Set comprising a food transportation container according to one of the claims 1 to 9 and a plug (18) by means of which it is possible to close the opening (17) of the container base (11).

## Revendications

1. Récipient pour le transport d'aliments (10) comprenant une partie inférieure (11) de récipient en forme de coupe et un élément électrique chauffant (20) pouvant être disposé dans l'espace intérieur de la partie inférieure (11) de récipient de manière amovible et retiré de celui-ci, cette partie inférieure (11) de récipient présentant un perçage (17) à travers lequel on peut faire passer des raccordements (22a, 24) de l'élément chauffant (20) et qui est ménagé à un endroit décalé vers le haut par rapport au fond (11a) de la partie inférieure (11) de récipient, **caractérisé en ce qu'**un évidement (25) est ménagé dans le fond (11a) de la partie inférieure (11) de récipient, dans lequel on peut introduire l'élément chauffant (20), un passage sans gradations, continu, lisse étant formé entre la surface de l'élément chauffant (20) et les surfaces contiguës du fond (11a) de la partie inférieure (11) de récipient.

2. Récipient pour le transport d'aliments selon la revendication 1, **caractérisé en ce que** l'élément chauffant (20) remplit au moins presque complètement l'évidement (25) ménagé dans le fond (11a) de la partie inférieure (11) de récipient.

3. Récipient pour le transport d'aliments selon la revendication 1 ou 2, **caractérisé en ce que** l'élément chauffant (20) comprend une plaque de fond (22) et une pièce de liaison (22b) venant en contact avec une extrémité axiale de celle-ci et s'étendant verticalement, à l'extrémité supérieure duquel sont disposés les raccordements (22a, 24) de l'élément chauffant (20) traversant le perçage (17).

4. Récipient pour le transport d'aliments selon l'une quelconque des revendications 1 à 3, **caractérisé en ce que** le perçage (17) est formé dans une face latérale (11b) de la partie inférieure (11) de récipient à peu près à mi-hauteur.

5. Récipient pour le transport d'aliments selon l'une quelconque des revendications 1 à 4, **caractérisé en ce que** le perçage (17) est constitué par une douille (18) fixée dans la paroi de la partie inférieure (11) de récipient.

6. Récipient pour le transport d'aliments selon l'une quelconque des revendications 1 à 5, **caractérisé en ce que** l'élément chauffant (20) présente une saillie (22a) venant en prise dans le perçage (17).

7. Récipient pour le transport d'aliments selon l'une quelconque des revendications 3 à 6, **caractérisé en ce qu'**un évidement supplémentaire est ménagé dans la face latérale (11b) présentant le perçage (17) de la partie inférieure (11) de récipient, dans laquelle peut être introduite la pièce de liaison (22b) de l'élément chauffant (20).

8. Récipient pour le transport d'aliments selon l'une quelconque des revendications 1 à 7, **caractérisé en ce que** l'élément chauffant (20) est entouré d'un matériau thermoconducteur.

9. Récipient pour le transport d'aliments selon l'une quelconque des revendications 1 à 8, **caractérisé en ce que** l'élément chauffant (20) est un élément PTC.

10. Ensemble comprenant un récipient pour le transport d'aliments selon l'une quelconque des revendications 1 à 9 et une obturation (18) permettant de fermer le perçage (17) de la partie inférieure (11) de récipient.
